# EUROPÄISCHE PATENTANMELDUNG

(11) **EP 3 187 859 A1**
(43) Veröffentlichungstag der Anmeldung: **05.07.2017**
(21) Anmeldenummer: 16002737.1
(22) Anmeldetag: 29.12.2016
(51) Int. Cl.: G01N 21/88, G06T 7/00, G06T 17/30

(54) **VERFAHREN ZUR ERMITTLUNG VON OBERFLÄCHENDEFEKTEN SOWIE COMPUTER-PROGRAMMPRODUKT**

(30) Priorität: 30.12.2015 DE 102015017010
(71) Anmelder: Faurecia Innenraum Systeme GmbH, 76767 Hagenbach (DE)
(72) Erfinder: Zemmrich, René, DE 57518 Betzdorf (DE); Kastell, Friedhelm, DE 57581 Katzwinkel (DE)
(74) Vertreter: Schatt, Markus F.

(57) **Zusammenfassung**

Verfahren zur Ermittlung von Oberflächendefekten einer Oberfläche (1a) eines Verkleidungsteils (1), wobei das Verfahren auf einem ersten Datensatz von Soll-Punkten einer Soll-Oberfläche des Verkleidungsteils innerhalb eines ersten vorgegebenen Prüfbereichs basiert, das Verfahren aufweisend die folgenden Schritte:
- aus einer ersten Mehrzahl von entlang zueinander und entlang einer Hauptrichtung verlaufenden Reihen von Soll-Punkten Ermittlung einer entlang zu diesen verlaufenden Soll-Referenzreihe (SR) von Soll-Referenzpunkten, die Mittelwerte von Höhenkoordinaten-Werten von jeweils einem der quer zur Hauptrichtung gelegenen Soll-Punkte der Reihen von Soll-Punkte sind,
- Bildung einer ersten Näherungs-Funktion (L1) als Näherung für den Verlauf der Soll-Referenzpunkte der Soll-Referenzreihe,
- mittels eines Oberflächen-Messgeräts an einer Ist-Oberfläche eines Exemplars des Verkleidungsteils Ermittlung eines zweiten Datensatzes von Ist-Punkten,
- Ermittlung einer entlang zu den Reihen von Ist-Punkten verlaufenden Ist-Referenzreihe von Ist-Referenzpunkten, die Mittelwerte der Höhenkoordinaten-Werte von jeweils einem der quer zur Hauptrichtung gelegenen Ist-Punkte der Reihen von Ist-Punkte sind,
- Bildung einer zweiten Näherungs-Funktion als Näherung für den Verlauf der Ist-Referenzpunkte der Ist-Referenzreihe,
- Vergleich der ersten Näherungs-Funktion und der zweiten Näherungs-Funktion und Ermittlung eines Oberflächendefekts,

sowie Computer-Programmprodukt.

## Beschreibung

Die Erfindung betrifft ein Verfahren zur Ermittlung von Oberflächendefekten und insbesondere zur Ermittlung von Defekten an Oberflächen von Verkleidungsteilen aus Kunststoff sowie Computer-Programmprodukt.

Aus der DE 20 2009 034 466 A1 ist ein Verfahren zur Ermittlung von Oberflächendefekten bekannt.

Aufgabe der vorliegenden Erfindung ist, ein Verfahren zur Ermittlung von Oberflächendefekten bereitzustellen, mit auf effiziente und zuverlässige Weise Oberflächendefekte ermittelt werden können.

Eine weitere Aufgabe ist, ein Computer-Programmprodukt bereitzustellen, in dem die Schritte des Verfahrens nach einem der voranstehenden Ansprüche implementiert sind Diese Aufgabe wird mit den Merkmalen des Anspruchs 1 gelöst. Weitere Ausführungsformen sind in den auf diesen rückbezogenen Unteransprüchen angegeben.

Nach der Erfindung ist insbesondere ein Verfahren zur Ermittlung von Oberflächendefekten eines Verkleidungsteils vorgesehen, das von einer ersten Näherungs-Funktion für eine Soll-Gestalt der Oberfläche, also einer Soll-Oberfläche, oder einen Verlauf dieser Oberfläche ausgeht und die folgenden Schritte aufweist:
(a) mittels eines Oberflächen-Messgeräts an einer Ist-Oberfläche eines Exemplars des Verkleidungsteils Ermittlung eines Ist-Punkte-Datensatzes von mehreren entlang und in einem Abstand zueinander verlaufenden Reihen von Ist-Punkten jeweils in Raumkoordinaten in zwei Richtungen entlang der Erstreckung der Ist-Oberfläche oder der Soll-Oberfläche und in einer quer zur Erstreckungsrichtung verlaufenden Höhenkoordinate,
(b) Ermittlung einer entlang zu den Reihen von Ist-Punkten verlaufenden Ist-Referenzreihe von Ist-Referenzpunkten, die jeweils einen Mittelwert der Höhenkoordinaten-Werte von Ist-Punkten jeweils einer sich in einer von der Hauptrichtung abweichenden Richtung erstreckenden Abfolge von Ist-Punkten der Istpunkte-Reihen aufweisen,
(c) Bildung einer zweiten Näherungs-Funktion als Näherung für den Verlauf der Ist-Referenzpunkte der Ist-Referenzreihe,
(d) aus der ersten Näherungs-Funktion und der zweiten Näherungs-Funktion Bildung einer Kriteriumskurve und Ermittlung eines Oberflächendefekts an Hand eines Kriteriums, das auf die Kriteriumskurve angewendet wird.

Bei Schritt (a) kann vorgesehen sein, dass die jeweilige Abfolge von Ist-Punkte insbesondere in jeweils einem von einander in der Hauptrichtung anschließenden und sich quer zu diesem erstreckenden Identifizierungs-Abschnitt oder Mittelungs-Querabschnitt gelegen sein kann.

Zur Durchführung des Schritts (a) kann vorgesehen sein,
- dass in einem ersten Schritt mittels eines Oberflächen-Messgeräts an einer Ist-Oberfläche eines Exemplars des Verkleidungsteils eine Ermittlung eines Ist-Punkte-Datensatzes von Ist-Punkten erfolgt,
- dass in einem zweiten Schritt eine Ermittlung von mehreren entlang und in einem Abstand zueinander verlaufenden Reihen von Ist-Punkten jeweils in Raumkoordinaten in zwei Richtungen entlang der Erstreckung der Ist-Oberfläche und in einer quer zur Erstreckungsrichtung verlaufenden Höhenkoordinate erfolgt, wobei die jeweilige Abfolge von Ist-Punkte insbesondere in jeweils einem von einander in der Hauptrichtung anschließenden und sich quer zu diesem erstreckenden Identifizierungs-Abschnitt oder Mittelungs-Querabschnitt gelegen sein kann.

Zur Durchführung des Schritts (b) kann insbesondere vorgesehen sein, dass eine Ermittlung einer entlang zu den Reihen von Ist-Punkten verlaufenden Ist-Referenzreihe von Ist-Referenzpunkten erfolgt, die jeweils einen Mittelwert der Höhenkoordinaten-Werte von Ist-Punkten jeweils einer sich quer zur Hauptrichtung erstreckenden Abfolge von Ist-Punkten der Istpunkte-Reihen aufweisen.

Der jeweilige Identifizierungs-Abschnitt oder Mittelungs-Querabschnitt kann nach der Ist-Gestalt oder der Soll-Gestalt der jeweiligen Oberfläche oder dem Verlauf derselben gewählt sein. Beispielsweise können der jeweilige Identifizierungs-Abschnitt nach der Stärke der Krümmung der Soll-Gestalt der Oberfläche oder der Anzahl der in einem Bereich jeweils vorgenommenen Messungen gewählt sein. Auch kann der jeweilige Identifizierungs-Abschnitt durch gleichmäßige Aufteilung der Ist-Gestalt oder der Soll-Gestalt der jeweiligen Oberfläche ermittelt werden, wobei eine Form des jeweiligen Identifizierungs-Abschnitts vorgegeben sein kann. Beispielsweise kann der jeweilige Identifizierungs-Abschnitt und dabei generell rechteckig und insbesondere streifenförmig, quadratisch, elliptisch, kreisförmig geformt sein.

Nach einer Ausführungsform des Verfahrens kann vorgesehen sein, dass die erste Näherungs-Funktion insbesondere entsprechend eines Oberflächenverlaufs der der Ist-Gestalt oder der Soll-Gestalt der jeweiligen Oberfläche oder der Anzahl der in einem Bereich jeweils vorgenommenen Messungen vorgegeben wird. Dabei kann alternativ dazu vorgesehen sein, dass die erste Näherungs-Funktion für die Soll-Gestalt der Oberfläche mit den folgenden Schritten ermittelt wird:
- aus einer Mehrzahl von entlang zueinander und entlang einer Hauptrichtung verlaufenden Reihen von Soll-Punkten Ermittlung einer entlang zu diesen verlaufenden Soll-Referenzreihe von Soll-Referenzpunkten, die jeweils einen Mittelwert der Höhenkoordinaten-Werte von [einer vorgegebenen Anzahl von] Soll-Punkten jeweils einer sich quer zur Hauptrichtung erstreckenden Abfolge von Soll-Punkten der Soll-Punkteaufweisen,
- Bildung der ersten Näherungs-Funktion als Näherung für den Verlauf der Soll-Referenzpunkte der Soll-Referenzreihe. Dabei kann vorgesehen sein, dass jeweils eine vorgegebene Anzahl von Soll-Punkten für eine sich quer zur Hauptrichtung erstreckende Abfolge von Soll-Punkten verwendet wird, um den jeweiligen Mittelwert der Höhenkoordinaten-Werte zu ermitteln.

In Kombination damit oder unabhängig davon kann dabei weiterhin vorgesehen sein, dass die jeweilige Abfolge von Soll-Punkten Soll-Punkte aufweist, die in jeweils einem von einander in der Hauptrichtung anschließenden und sich quer zu diesem erstreckenden Mittelungs-Querabschnitten der Oberfläche gelegen sind. Diese Mittelungs-Querabschnitte können rechteckig und insbesondere streifenförmig, quadratisch, elliptisch oder andersförmig gestaltet sein.

Bei der Bildung der ersten Näherungs-Funktion kann diese eine Näherungsfunktion für den Verlauf der Soll-Referenzpunkte der Soll-Referenzreihe sein. Die jeweilige Näherungs-Funktion kann jeweils insbesondere eine Näherungs-Polynomfunktion sein.

Unter einer Näherungs-Funktion wird hierin eine kontinuierliche Kurve entlang einer Reihe von Punkten, die insbesondere Soll-Punkte oder Ist-Punkte sein können, verstanden. Insbesondere kann die kontinuierliche Kurve mathematisch definiert sein.

Nach einer Ausführungsform des erfindungsgemäßen Verfahrens kann vorgesehen sein, dass die erste Näherungs-Funktion oder die zweite Näherungs-Funktion oder beide dieser Funktionen aus einer oder mehreren der folgenden Funktionen gebildet sind:
- einer Näherungs-Polynomfunktion,
- einer Spline-Funktion,
- einer B-Spline-Funktion,
- einer Non-Uniform Rational B-Spline-Funktion.

Nach einer Ausführungsform des erfindungsgemäßen Verfahrens kann vorgesehen sein,
- dass die Kriteriumskurve durch Bildung von Differenzen zwischen Werten der ersten Näherungs-Funktion und Werten der zweiten Näherungs-Funktion entlang der jeweiligen Hauptrichtung an einander entsprechenden Stellen erzeugt wird,
- dass eine Defektstelle identifiziert wird, an denen als Defekt-Kriterium das Integral der Differenzen über die Länge des Prüfbereichs entlang der jeweiligen Hauptrichtung geteilt durch einen Längenwert, der aus einer Länge des Prüfbereichs entlang der jeweiligen Hauptrichtung abgeleitet ist, einen vorgegebenen Grenzwert überschreitet.

Nach einer Ausführungsform des erfindungsgemäßen Verfahrens kann vorgesehen sein,
- dass die Kriteriumskurve durch Bildung von Differenzen von Werten von Ableitungsfunktionen z'ₛₒₗₗ (x), z'ᵢₛₜ (x) der ersten Näherungs-Funktion und der zweiten Näherungs-Funktion (L2) entlang der jeweiligen Hauptrichtung an einander entsprechenden Stellen erzeugt wird,
- dass eine Defektstelle identifiziert wird, an denen als Defekt-Kriterium die Differenz der Werte der Ableitungsfunktionen einen vorgegebenen Grenzwert überschreitet.

Nach einer Ausführungsform des erfindungsgemäßen Verfahrens kann vorgesehen sein,
- dass die Kriteriumskurve eine Differenzkurve aus der Differenz der ersten Näherungs-Funktion und der zweiten Näherungs-Funktion ist,
- dass das Defekt-Kriterium ein Grenzwert ist,
- dass die Ermittlung eines Oberflächen-Defekts durch die Ermittlung von Abweichungen erfolgt, die den Grenzwert überschreiten.

Nach einer Ausführungsform des erfindungsgemäßen Verfahrens kann vorgesehen sein,
- dass die Kriteriumskurve eine Differenzkurve aus der Differenz der ersten Näherungs-Funktion und der zweiten Näherungs-Funktion ist,
- dass das Defekt-Kriterium ein Grenzwert ist,
- dass die Ermittlung eines Oberflächen-Defekts durch die Ermittlung von Abweichungen zwischen einer Ableitung der ersten Näherungs-Funktion und einer Ableitung der zweiten Näherungs-Funktion erfolgt, die den Grenzwert überschreiten.

Generell kann bei einer Ausführungsform des erfindungsgemäßen Verfahrens vorgesehen sein, dass die Höhenkoordinaten der Soll-Punkte jeweils die Höhenkoordinate von Gitterpunkten sind, die in einer durch die Raumkoordinaten in zwei Richtungen entlang der Erstreckung der Soll-Oberfläche definierten Ebene liegen.

Generell kann bei einer Ausführungsform des erfindungsgemäßen Verfahrens auch vorgesehen sein, dass die Höhenkoordinaten der Ist-Punkte jeweils die Höhenkoordinate von Gitterpunkten sind, die in einer durch die Raumkoordinaten in zwei Richtungen entlang der Erstreckung der Ist-Oberfläche definierten Ebene liegen.

Weiterhin kann bei einer Ausführungsform des erfindungsgemäßen Verfahrens generell vorgesehen sein, dass die Lage des Koordinatensystems für die Ist-Punkte durch ein näherungsweises Gleichsetzen von zumindest drei Soll-Punkten mit drei Ist-Punkten erfolgt.

Nach einem weiteren Aspekt der Erfindung ist ein Computer-Programmprodukt vorgesehen, in dem die Schritte einer erfindungsgemäßen Ausführungsform des Verfahrens implementiert sind.

Unter dem Ausdruck "Erstreckung" wird hierin insbesondere der Verlauf oder in lokaler Hinsicht die Richtung einer Komponente wird eine Mittelachse verstanden, die sich aus den Flächenmittelpunkten der kleinsten Querschnittsflächen an jedem Punkt der Komponente ergibt.

Der Ausdruck "in der Dickenrichtung Z gesehen" bedeutet hierin zur Bezeichnung einer relativen Lage von angesprochene Merkmale oder Komponenten eine Blickrichtung, aufgrund einer Lage der angesprochenen Merkmale oder Komponenten angegeben werden.

Der Ausdruck "entlang" kann hierin im Zusammenhang mit den hierin genannten Richtungsangaben, die den Verlauf einer Konturlinie oder einer Oberfläche betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von maximal 45 Grad und vorzugsweise von maximal 30 Grad von einer Bezugsrichtung oder Bezugsachse abweicht, auf die bzw. der die jeweilige Richtungsangabe bezogen ist.

Der Ausdruck "quer" kann hierin im Zusammenhang mit den hierin genannten Richtungsangaben, die den Verlauf einer Konturlinie oder einer Oberfläche betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von minimal 45 Grad und vorzugsweise von minimal 60 Grad von einer Bezugsrichtung oder Bezugsachse abweicht, auf die bzw. der die jeweilige Richtungsangabe bezogen ist.

Unter dem Ausdruck "im Wesentlichen" gleich eines Referenzbetrags wird ein Betrag verstanden, der bis zu 20% von dem Referenzbetrag abweicht.

Der Ausdruck generell bedeutet insbesondere, dass das betreffende Merkmal nicht nur an der Ausführungsform, in diesem Zusammenhang der Ausdruck "generell" mit Bezug auf das jeweilige Merkmal verwendet worden ist, sondern auch an jeder anderen der hiermit beschriebenen Ausführungsformen vorhanden sein kann.

Unter Mittellinie einer Komponente in einer angegebenen Richtung wird die Verbindungslinie der Flächenschwerpunkte von entlang der angegebenen Richtung sich quer zu dieser ergebenden Querschnittsflächen verstanden, die dem Betrag nach jeweils am kleinsten sind. Insbesondere wird unter Mittellinie eine gerade Linie verstanden, die entlang der genannten Verbindungslinie der Flächenschwerpunkte verläuft, wobei diejenige gerade Linie relevant ist, die durch den Mittelpunkt der genannten Verbindungslinie verläuft und die in der Summe entlang der Verbindungslinie den geringsten Abstandswert, wie z.B. Intergral- oder Flächenwert, zu dieser hat.

Unter dem Begriff "Abstand" insbesondere zwischen zwei Flächen wird hierin insbesondere der kürzeste Abstand verstanden.

Unter einem Winkel zwischen einer Linie oder Richtung und einer weiteren Linie oder Richtung als Bezugslinie wird hierin derjenige Winkel verstanden, der sich aus einer Projektion der Linien bzw. Richtungen in Richtung des kürzesten Abstandes zwischen den Linien bzw. Richtungen an der Stelle des Schnittpunkts derselben ergibt.

Bei der Bildung der Mittelwerte von Ist-Punkten oder von Soll-Punkten kann jeweils insbesondere vorgesehen sein, dass jeder der Ist-Punkte bzw. Soll-Punkte nur jeweils zur Ermittlung eines einzigen Mittelwertes verwendet wird.

Im Folgenden werden Ausführungsformen der Erfindung an Hand der beiliegenden Figuren beschrieben, die zeigen:
- Figur 1 eine schematische Seitendarstellung einer Türverkleidungsteils als Beispiel für ein Verkleidungsteil, wobei dem Türverkleidungsteil ein Oberflächen-Messgerät zugeordnet ist,
- Figur 2 eine perspektivische Darstellung von Soll-Oberflächenpunkten eines mathematischen Modells des Türverkleidungsteils über der Anordnung vorgegebener Gitterpunkte,
- Figur 3 eine Darstellung von mehreren Verläufen von Reihen von Soll-Punkten und einer daraus abgeleiteten Soll-Referenzreihe,
- Figur 4 eine perspektivische Darstellung der mittels des Oberflächen-Messgeräts ermittelten Ist-Oberflächenpunkte eines konkreten Exemplars des Türverkleidungsteils über einer Anordnung vorgegebener Gitterpunkte,
- Figur 5 eine Darstellung von mehreren Verläufen von Reihen von Ist-Punkten und einer daraus abgeleiteten Ist-Referenzreihe,
- Figur 6 ein Diagramm, in das eine Soll-Referenzreihe und eine Ist-Referenzreihe eingetragen sind,
- Figur 7 ein Diagramm, in das eine erste Näherungs-Polynomfunktion und eine zweite Näherungs-Polynomfunktion eingetragen sind,
- Figur 8 ein Flussdiagramm für den Ablauf von Verfahrensschritten einer Ausführungsform des erfindungsgemäßen Verfahrens.

Nach der Erfindung ist ein Verfahren zur Ermittlung von Oberflächendefekten einer Oberfläche 1 a eines Verkleidungsteils 1 vorgesehen.

Das Verkleidungsteil 1 ist ein konkretes Exemplar eines theoretischen, also durch geometrische Werte beschriebenen Verkleidungsteils. Das konkrete Verkleidungsteil kann durch an diesem jeweils ermittelte Ist-Punkte oder als konkretes Exemplar eines theoretisch vorgegebenen Verkleidungsteils beschrieben sein. Ein solches theoretisch vorgegebenes Verkleidungsteil kann insbesondere durch eine erste Näherungs-Funktion L1 beschrieben sein, die im Folgenden als "erste Näherungs-Funktion L1" bezeichnet wird. Die erste Näherungs-Funktion L1 kann insbesondere ein Kurvenverlauf entlang einer vorgegebenen Hauptrichtung des vorgegebenen Verkleidungsteils sein. Die erste Näherungs-Funktion L1 kann insbesondere einen Verlauf einer Kurve definieren, die eine Verbindungslinie oder eine näherungsweise Verbindungslinie von entlang der Hauptrichtung gelegenen Soll-Punkten der Oberfläche des vorgegebenen Verkleidungsteils darstellt.

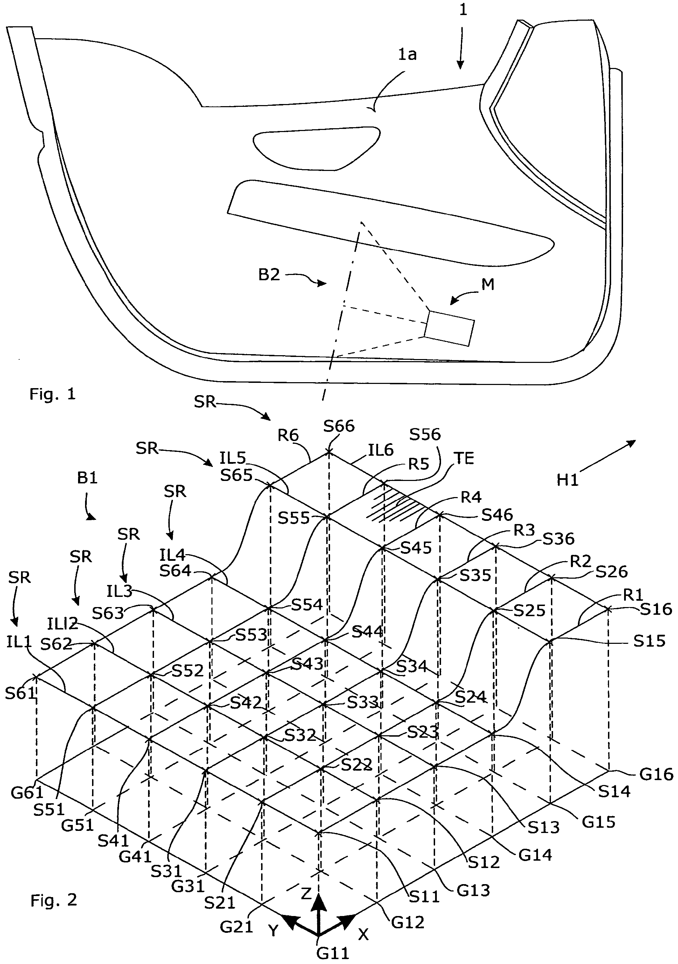

Bei den hierin beschriebenen Ausführungsformen des Verfahrens zur Ermittlung von Oberflächendefekten kann vorgesehen sein, dass das Verkleidungsteil 1 mittels eines ersten Datensatzes theoretisch beschrieben ist, also durch geometrische Werte vorgegeben ist. Bei dieser Vorgabe ist Basis des erfindungsgemäßen Verfahrens ein erster Datensatz von Soll-Punkten eines ersten Prüfbereichs B1 einer Soll-Oberfläche des Verkleidungsteils, wobei die Soll-Punkte innerhalb eines vorgegebenen Prüfbereichs gelegen sind, der im Folgenden als erster Prüfbereich bezeichnet wird. In der Figur 2 sind beispielartig für eine Ausführungsform des Verfahrens Soll-Punkte des ersten Prüfbereichs B1 dargestellt. Die Soll-Punkte sind mit den Bezeichnungen
S11, S12, ..., S16;
S21, S22, ..., S26;
S31, S32, ..., S36;
S41, S42, ..., S46;
S51, S52, ..., S56;
S61, S62, ..., S66
versehen. Bei der Durchführung des Verfahrens kann auch von einer größeren und insbesondere wesentlich größeren Verteilungsdichte der Soll-Punkte ausgegangen werden. Eine näherungsweise durch die Soll-Punkte gelegte Ebene würde eine theoretische Soll-Oberfläche TE ergeben. Die Soll-Oberfläche TE kann insbesondere eine nach einer vorgegebenen Funktion, beispielsweise eine Polynom-Funktion gebildeten Funktion sein, bei der die Summe der Abstände der Soll-Punkte von der Soll-Oberfläche TE minimal ist oder einen Mindestwert unterschreiten. Die Soll-Oberfläche TE kann auch durch mathematisches Nachmodellieren mittels einer Abschätzung definiert sein. Der bei dieser Ausführungsform vorgegebene Datensatz weist Koordinatenwerte von Raumkoordinaten für jeden Soll-Punkt auf. Die Raumkoordinaten sind bei den erfindungsgemäßen Ausführungsformen des Verfahrens generell insbesondere bezogen auf Koordinatenrichtungen, von denen zwei Koordinatenrichtungen in zwei unterschiedlichen Richtungen entlang der Erstreckung der Soll-Oberfläche TE und eine dritte Koordinatenrichtung als Höhenkoordinate quer zur Erstreckung der Soll-Oberfläche TE oder quer zu den entlang der Erstreckung der Soll-Oberfläche TE verlaufenden Koordinatenrichtungen verläuft. In der Figur 2 sind die zwei entlang der Erstreckung der Soll-Oberfläche TE verlaufenden Koordinatenrichtungen durch die X-Achse und die Y-Achse und die Höhenkoordinate als Z-Achse eines kartesischen Koordinatensystems definiert. Weiterhin sind die Soll-Punkte derart angeordnet, dass deren Spur in der X-Y-Ebene Gitterpunkte ergeben. Die zwei in unterschiedlichen Richtungen entlang der Erstreckung der Soll-Oberfläche TE verlaufenden Koordinatenrichtungen sind dabei zwei kartesische Koordinaten, die einen rechten Winkel einschließen. Beispielsweise sind in der Figur 2 die Gitterpunkte G11, G12, G13, G21, G22, G23 als Spurpunkte der Soll-Punkte S11 bzw. S12 bzw. S13 bzw. S21 bzw. S22 bzw. S23 eingetragen.

Generell können die zwei entlang der Erstreckung der Soll-Oberfläche TE verlaufenden Koordinatenrichtungen in einem anderen Winkel als 90 Grad zueinander verlaufen. Ebenso verläuft generell die Höhenkoordinaten-Richtung generell quer zu beiden entlang der Erstreckung der Soll-Oberfläche TE verlaufenden Koordinatenrichtungen. Auch kann vorgesehen sein, dass die Spurpunkte der Soll-Punkte in der Ebene, die durch die entlang der Erstreckung der Soll-Oberfläche TE verlaufenden Koordinatenrichtungen aufgespannt wird, unregelmäßig, also ungeordnet gelegen sind.

Nach einer weiteren Ausführungsform des erfindungsgemäßen Verfahrens wird die erste Näherungs-Funktion L1 auf folgende Weise ermittelt: Dabei wird aus einer ersten Mehrzahl von entlang zueinander und entlang einer Hauptrichtung verlaufenden Reihen von Soll-Punkten eine Soll-Referenzreihe ermittelt. In der Figur 2 sind entsprechend der Anordnung der Soll-Punkte sechs Reihen von Soll-Punkten dargestellt, die mit den Bezugszeichen R1, R2, R3, R4, R5, R6 bezeichnet sind. Bei der dargestellten Ausführungsform der Soll-Punkte-Anordnung ergeben sich die Reihen aus den Reihen von Gitterpunkten, die in Richtung der Y-Achse hintereinander liegen und sich in der Richtung der X-Achse als die Hauptrichtung erstrecken. Alternativ dazu kann bei einer anderen Ausführungsform auch vorgesehen sein, dass Reihen von Soll-Punkten in Richtung der X-Achse als die Hauptrichtung liegen.

Generell kann vorgesehen sein, dass die Soll-Punkte unregelmäßig oder ungeordnet, auch hinsichtlich ihrer Spur in der in der Ebene, die durch die entlang der Erstreckung der Soll-Oberfläche TE verlaufenden Koordinatenrichtungen aufgespannt wird, verteilt sind.

Generell und insbesondere bei einer unregelmäßigen oder ungeordneten Positionen der Soll-Punkte kann die Hauptrichtung beliebig und z.B. nach einer charakteristischen Erstreckungsrichtung des Verkleidungsteils, z.B. nach der Richtung, in denen die größten Krümmungen und/der Krümmungsänderungen der Oberfläche, ermittelt oder gewählt und als vorbestimmte Hauptrichtung gesetzt werden. Dabei kann, insbesondere bei einer unregelmäßigen Anordnung von Soll-Punkten, vorgesehen sein, dass sich die Reihen von Soll-Punkten aus parallel zueinander und beispielsweise in beliebig vorgegebenen oder konstanten Abständen zueinander verlaufenden geraden Linien ergeben, wobei die Punkte einer jeweiligen Reihe von Soll-Punkten jeweils diejenigen Punkte sind, die in einem Maximalabstand zu einer jeweiligen Linie gelegen sind.

Die Ermittlung einer Soll-Referenzreihe von Soll-Referenzpunkten, die entlang zu den Reihen von Soll-Punkten verlaufen, erfolgt aus einer ersten Mehrzahl von entlang zueinander und entlang einer Hauptrichtung verlaufenden Reihen von Soll-Punkten. Dabei kann vorgesehen sein, dass als Soll-Referenzpunkte eine Reihe von Soll-Punkten in oder entlang der Hautrichtung ausgewählt wird, beispielsweise eine nach der Form der Oberfläche des Soll-Verkleidungsteils ausgewählte Reihe oder die mittlere Reihe, und daran gelegene Soll-Punkte, insbesondere solche, die innerhalb eines vorgegebenen Maximalabstands zu der Reihe oder die innerhalb eines diese Reihe umgrenzenden Bereichs z.B. vorbestimmter Form (quadratisch, elliptisch, kreisförmig, streifenförmig, o.a.) gelegen sind. Dabei können deren Positionen entlang der Hauptrichtung und als Höhenkoordinaten-Werte deren jeweils tatsächlichen Höhenkoordinaten-Werte oder alternativ gruppenweise erzeugte Mittelwerte verwendet werden. Dazu alternativ oder zusätzlich kann vorgesehen sein, dass als Soll-Referenzpunkte der Soll-Referenzreihe in oder entlang der Hautrichtung gelegene Soll-Punkte verwendet werden, die jeweils durch ihre Höhenkoordinaten-Werte bestimmt sind. Dabei kann vorgesehen sein, dass die Höhenkoordinaten-Werte der Soll-Referenzpunkte jeweils ein Mittelwert der Höhenkoordinaten-Werte von z.B. einer vorgegebenen Anzahl von Soll-Punkten jeweils einer vorgegebenen Abfolge oder einer vorgegebenen Gruppe von Soll-Punkten sind. Die vorgegebene Anzahl von Soll-Punkten kann insbesondere eine vorgegebene Abfolge von Soll-Punkten sein, die jeweils insbesondere eine sich in einer von der Hauptrichtung abweichenden Richtung und dabei insbesondere eine sich quer zur Hauptrichtung erstreckende Abfolge von Soll-Punktenist. Nach einer Ausführungsform ist vorgesehen, dass die jeweilige Abfolge von Soll-Punkten zur Ermittlung der Höhenkoordinaten-Werte der Soll-Referenzpunkte jeweils in einem Identifizierungs-Abschnitt oder Mittelungs-Querabschnitt gelegen sind, wobei mehrere solcher Identifizierungs-Abschnitte oder Mittelungs-Querabschnitte sich quer zur Hauptrichtung erstrecken und sich in der Hauptrichtung aneinander anschließen. Die Breite der Identifizierungs-Abschnitt oder Mittelungs-Querabschnitt in der Hauptrichtung gesehen kann durch arithmetische Mittelung der Länge des Prüfbereichs in der Hauptrichtung ermittelt werden oder je nach dem Einzelfall festgestellt sein, beispielsweise durch die Zahl der Messung von Ist-Punkten entlang der Hauptrichtung.

Die Ermittlung einer Soll-Referenzreihe von Soll-Referenzpunkten, die entlang zu den Reihen von Soll-Punkten verlaufen, erfolgt auf der Basis der Reihen von Soll-Punkten - bei der Ausführungsform der Figur 2 die Reihen R1, R2, R3, R4, R5, R6 - wobei nach einer Ausführungsform des Verfahrens die Soll-Referenzpunkte Mittelwerte der Höhenkoordinaten-Werte von Soll-Punkten der Reihen von Soll-Punkten sind oder sich aus diesen ergeben, die jeweils in einem vorgegebenen und sich in einer von der Hauptrichtung abweichenden Richtung und insbesondere sich quer zur Hauptrichtung erstreckenden Identifizierungs- oder Umgebungsbereich gelegen sind. Zur sich in der Hauptrichtung erstreckenden Breite der Umgebungsbereiche kann festgelegt sein, dass die Umgebungsbereiche in der Hauptrichtung hintereinander gelegen sind und sich diese nicht überlappen. Die Länge der Umgebungsbereiche kann derart festgestellt sein, dass diese eine Mindestzahl von Soll-Punkten, z.B. zumindest zwei Soll-Punkte, enthalten.

Nach einer Ausführungsform des Verfahrens sind die Soll-Referenzpunkte oder ergeben sich diese als Mittelwerte der Höhenkoordinaten-Werte von jeweils entlang einer Linie gelegenen Soll-Punkte der Reihen von Soll-Punkten, wobei die Richtung der Linie generell an jeder Stelle eine zu der Hauptrichtung abweichende Richtung hat. Insbesondere kann vorgesehen sein, dass die Soll-Referenzpunkte Mittelwerte der Höhenkoordinaten-Werte von jeweils einem der entlang oder auf einer Linie quer zur Hauptrichtung gelegenen Soll-Punkte der Reihen von Soll-Punkten sind oder sich aus diesen ergeben. Die Linien können dabei auch Kurven aufweisen. Dabei kann vorgegeben sein, dass sich die Linien, entlang oder auf denen die Soll-Punkte gelegen sind, nicht schneiden. Auch kann vorgegeben sein, dass die Linien Mittellinien der Umgebungsbereiche sind. Dabei kann vorgesehen sein, dass sich quer zur Hauptrichtung erstreckende und entlang der Hauptrichtung hintereinander gelegene Umgebungsbereiche und insbesondere Mittelungs-Querabschnitte oder Identifizierungsbereiche definiert werden und dass für die Ermittlung eines jeweiligen Mittelwertes der Höhenkoordinaten-Werte für jeden Identifizierungsbereich die Höhenkoordinaten-Werte von Soll-Punkten verwendet werden, die in jeweils einem Identifizierungsbereich gelegen sind. Die Identifizierungsbereiche können sich über die gesamte Breite des Prüfbereichs erstrecken und können insbesondere durch ihre Breite definiert sein, die dadurch bestimmt sein kann, dass deren in der Hauptrichtung verlaufende Breite aus der Länge des Prüfbereichs B1 dividiert durch die Anzahl der Soll-Punkte ermittelt wird. Hierbei kann die Länge des Prüfbereichs B1 in verschiedener Weise definiert sein, wie z.B. durch die Länge der Mittellinie des Prüfbereichs B1, durch die Länge einer Geraden durch den Flächenmittelpunkt der Oberfläche TE in der Hauptrichtung, durch die Länge der längsten Linie quer über die Oberfläche TE, durch eine charakteristische Länge mit der größten Krümmung oder Krümmungsänderung. Anstatt von Identifizierungsbereichen kann vorgesehen sein, dass zur Ermittlung der Mittelwerte der Höhenkoordinaten-Werte Identifizierungslinien oder Identifizierungsgeraden definiert werden, die quer oder senkrecht zur Hauptrichtung verlaufen und deren Abstand wie bezüglich der Breite der Identifizierungsbereiche angegeben ermittelt werden kann.

Bei dem dargestellten Ausführungsbeispiel werden die Mittelwerte der Höhenkoordinaten-Werte jeweils für Soll-Punkte dadurch definiert, dass die Soll-Referenzreihe SR jeweils die auf Identifizierungslinien IL1, IL2, IL3, IL4, IL5 gelegene Soll-Punkte aufweist, wobei in der Y-Richtung verlaufende Geraden sind, die jeweils einen Identifizierungs-Abschnitt oder Mittelungs-Querabschnitt bildet. Die Referenzreihe SR ist jeweils eine Reihe von in der Y-Richtung hintereinander liegenden Gitterpunkten, z.B. die Sollpunkte S11, S21, ..., S61 , wobei die Identifizierungslinien IL1, IL2, IL3, IL4, IL5 quer zu der Y-Richtung verlaufende Geraden sind, die die jeweiligen Gitterpunkte miteinander verbinden und lediglich zu Veranschaulichung in die Figur 2 eingetragen sind.

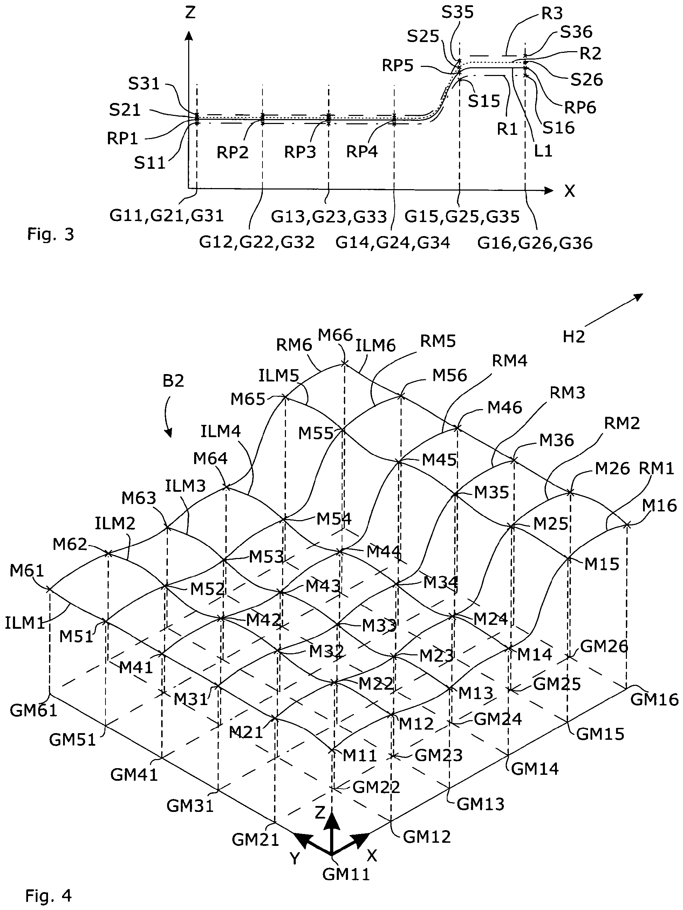

In der Figur 3 sind in einem Diagramm beispielartig Reihen R1, R2, R3 von Soll-Punkten dargestellt, die der Anschaulichkeit wegen auf einer Soll-Oberfläche beruhen, die gegenüber der in der Figur 2 dargestellten theoretischen Soll-Oberfläche TE abgewandelt sind. Die nicht durchgezogenen Linien R1, R2, R3 sind nur zur Veranschaulichung eingetragen, um in Analogie zur Darstellung der Figur 2 drei Reihen von Soll-Punkten kenntlich zu machen. Aus den Reihen der Soll-Punkte in dem Prüfbereich B1 wird eine Reihe von Soll-Referenzpunkten RP1, RP2, RP3, RP4, RP5, RP6 ermittelt. Dabei entsteht jeder Referenzpunkt dadurch, dass sich der Höhenkoordinaten-Wert für die jeweilige Identifizierungslinie als Mittelwert der Höhenkoordinaten-Werte der Soll-Punkte (in der Figur 3 z.B. die Soll-Punkte S11, S21, S31), die auf jeweils einer entsprechenden Identifizierungslinie als jeweiliger Identifizierungs-Abschnitt gelegen sind, ergibt. Die gemäß Figur 3 entstehende Soll-Referenzreihe RL1 ist dort zur Veranschaulichung durch eine Verbindungslinie kenntlich gemacht, der das Bezugszeichen SR zugeordnet ist.

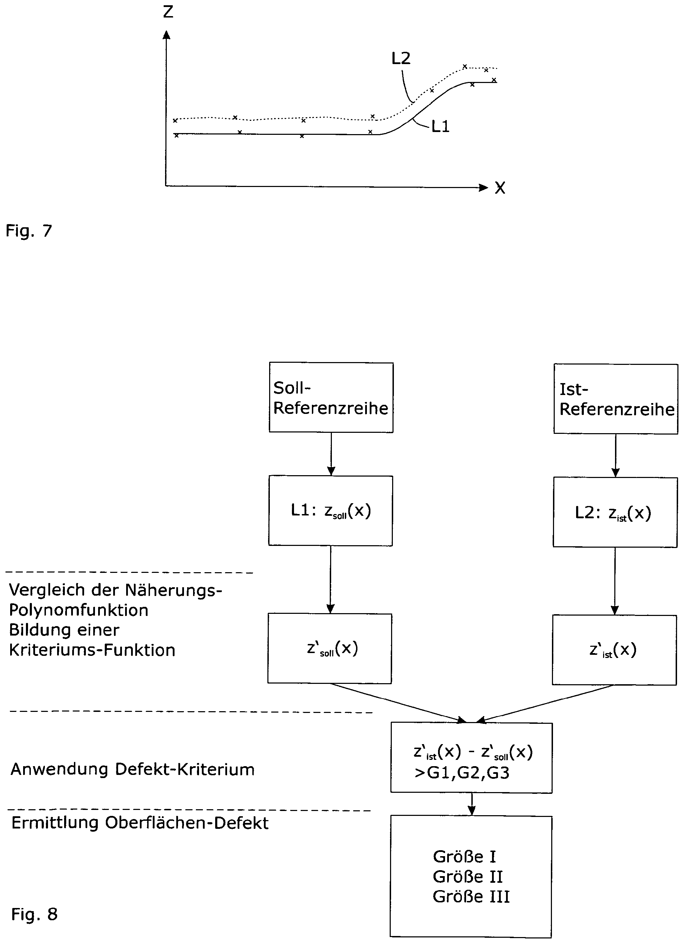

Bei einer Ausführungsform wird in einem weiteren Schritt wird die erste Näherungs-Funktion L1 als Näherung für den Verlauf der Soll-Referenzreihe der Soll-Referenzpunkte gebildet. Für das Beispiel der Figur 3 ist eine solche erste Näherungs-Funktion L1 in der Figur 7 dargestellt.

Im Folgenden wird, die analog zu den voranstehend beschriebenen Verfahrensschritten vorgesehene Ermittlung von Ist-Punkten einer tatsächlichen Oberfläche oder Ist-Oberfläche 1a eines konkreten Verkleidungsteils 1 bis zur Bildung einer zweiten Näherungs-Funktion L2 als Näherung für den Verlauf der Ist-Referenzreihe von Ist-Referenzpunkten beschrieben. Die Ermittlung von Ist-Punkten oder daraus abgeleiteten Ist-Punkten nach einer der im Folgenden beschriebenen Arten kann in Kombination mit einer Ausführungsform zur Ermittlung von Soll-Punkten oder daraus abgeleiteten Soll-Punkten erfolgen.

Hierzu erfolgt zunächst in einem zweiten Prüfbereich B2 eine Ermittlung von mehreren entlang und z.B. in einem vorgegebenen Mindest-Abstand zueinander verlaufenden Punktreihen von Ist-Punkten mittels einer Messvorrichtung M, die schematisch in der Figur 1 dargestellt ist. Die Ermittlung von Punktreihen von Ist-Punkten kann insbesondere in Raumkoordinaten erfolgen, die durch zwei Richtungen entlang der Erstreckung der Ist-Oberfläche und eine quer zur Erstreckungsrichtung verlaufende Höhenkoordinate definiert sind. Die Raumkoordinaten können dem Raumkoordinaten-System entsprechen, in dem die Soll-Punkte beschrieben sind. Insbesondere kann die Lage des Koordinatensystems für die Ist-Punkte dadurch festgelegt werden, dass ein näherungsweises Gleichsetzen der Raumkoordinaten von zumindest drei Soll-Punkten mit den Raumkoordinaten von drei vergleichbaren Ist-Punkten erfolgt. Unter "vergleichbar" wird hierunter insbesondere verstanden, dass die Soll-Punkte auf dem konkreten Verkleidungsteils 1 als Ist-Punkte identifiziert werden. Auf diese Basis kann der zweite Prüfbereichs B2 aus dem ersten Prüfbereich B1 z.B. durch Gleichsetzung ermittelt werden. In der Figur 4 sind beispielartig Ist-Punkte des zweiten Prüfbereichs B2 dargestellt. Die Punkte sind mit den Bezeichnungen
M11, M12, ..., M16;
M21, M22, ..., M26;
M31, M32, ..., M36;
M41, M42, ..., M46;
M51, M52, ..., M56;
M61, M62, ..., M66
versehen sind. Bei der Durchführung des Verfahrens kann von einer größeren und insbesondere wesentlich größeren Verteilungsdichte der Ist-Punkte ausgegangen werden, die unabhängig von der Verteilung und Anzahl der Soll-Punkte sein kann. Der Datensatz weist Koordinatenwerte von Raumkoordinaten für jeden Ist-Punkt auf. Die Raumkoordinaten der Ist-Punkte sind generell bezogen auf Koordinatenrichtungen, von denen zwei Koordinatenrichtungen in zwei unterschiedlichen Richtungen entlang der Erstreckung der Oberfläche 1 a und eine dritte Koordinatenrichtung als Höhenkoordinate quer zur Erstreckung der Oberfläche 1 a oder quer zu den entlang der Erstreckung der Oberfläche 1 a verlaufenden Koordinatenrichtungen verläuft. Die Koordinatenrichtungen können auch anders und insbesondere wie an Hand der Soll-Punkte beschreiben, vorgesehen sein. In der Figur 4 sind die zwei entlang der Erstreckung der Soll-Oberfläche TE verlaufenden Koordinatenrichtungen durch die X-Achse und die Y-Achse und die Höhenkoordinate als Z-Achse definiert, da im gezeigten Ausführungsbeispiel das Koordinatensystem für die Messungen dem für den erster Datensatz von Soll-Punkten verwendeten Koordinatensystem gleichgesetzt wurde. Weiterhin sind die Ist-Punkte derart angeordnet, dass deren Spur in der X-Y-Ebene Gitterpunkte ergeben. Beispielartig in der Figur 4 die Gitterpunkte GM11, GM12, GM13, GM21, GM22, GM23 als Spurpunkte der Ist-Punkte M11 bzw. M12 bzw. M13 bzw. M21 bzw. M22 bzw. M23 eingetragen.

In einem weiteren Verfahrensschritt wird aus einer ersten Mehrzahl von entlang zueinander und entlang einer Hauptrichtung verlaufenden Reihen von Ist-Punkten eine Ist-Referenzreihe ermittelt. In der Figur 4 sind entsprechend der Anordnung der Ist-Punkte sechs Reihen von Ist-Punkten dargestellt, die mit den Bezugszeichen RM1, RM2, RM3, RM4, RM5, RM6 bezeichnet sind. Bei der dargestellten Ausführungsform der Ist-Punkte-Anordnung ergeben sich die Reihen von Ist-Punkten jeweils aus den Reihen von Gitterpunkten, die hintereinander in Richtung der X-Achse als die Hauptrichtung liegen. Alternativ dazu kann bei einer anderen Ausführungsform auch vorgesehen sein, dass Reihen von Ist-Punkten in Richtung der X-Achse als die Hauptrichtung liegen. Generell kann vorgesehen sein, dass die Ist-Punkte unregelmäßig oder ungeordnet, auch hinsichtlich ihrer Spur in der in der Ebene, die durch die entlang der Erstreckung der Ist-Oberfläche 1 a verlaufenden Koordinatenrichtungen aufgespannt wird, verteilt sind. Generell und insbesondere bei einer unregelmäßigen oder ungeordneten Positionen der Ist-Punkte kann die Hauptrichtung beliebig und z.B. nach einer charakteristischen Erstreckungsrichtung des konkreten Exemplars des Verkleidungsteils 1, z.B. nach der Richtung, in denen die größten Krümmungen und/der Krümmungsänderungen der Oberfläche, gewählt und als vorbestimmte Hauptrichtung gesetzt werden.

Die Ermittlung einer Ist-Referenzreihe von Ist-Referenzpunkten, die entlang der Reihen von Ist-Punkten verlaufen, erfolgt auf der Basis der Reihen von Ist-Punkten - bei der Ausführungsform die Reihen RM1, RM2, RM3, RM4, RM5, RM6, wobei die Ist-Referenzpunkte Mittelwerte der Höhenkoordinaten-Werte von Ist-Punkten der Reihen von Ist-Punkten sind oder sich aus diesen ergeben, die jeweils in einem vorgegebenen und sich in einer von der Hauptrichtung abweichenden Richtung und insbesondere sich quer zur Hauptrichtung erstreckenden Identifizierungs- oder Umgebungsbereich gelegen sind. Zur sich in der Hauptrichtung erstreckenden Breite der Umgebungsbereiche kann festgelegt sein, dass die Umgebungsbereiche in der Hauptrichtung hintereinander gelegen sind und sich diese nicht überlappen. Die Länge der Umgebungsbereiche kann derart festgestellt sein, dass diese eine Mindestzahl von Ist-Punkten, z.B. zumindest zwei Ist-Punkte, enthalten.

Nach einer Ausführungsform des Verfahrens sind die Ist-Referenzpunkte oder ergeben sich diese als Mittelwerte der Höhenkoordinaten-Werte von jeweils entlang einer Linie gelegenen Ist-Punkte der Reihen von Ist-Punkten, wobei die Richtung der Linie generell an jeder Stelle eine zu der Hauptrichtung abweichende Richtung hat. Insbesondere kann vorgesehen sein, dass die Ist-Referenzpunkte Mittelwerte der Höhenkoordinaten-Werte von jeweils einem der entlang oder auf einer Linie quer zur Hauptrichtung gelegenen Ist-Punkte der Reihen von Ist-Punkten sind oder sich aus diesen ergeben. Die Linien können dabei auch Kurven aufweisen. Dabei kann vorgegeben sein, dass sich die Linien, entlang oder auf denen die Ist-Punkte gelegen sind, nicht schneiden. Auch kann vorgegeben sein, dass die Linien Mittellinien der Umgebungsbereiche sind. Dabei kann vorgesehen sein, dass die jeweiligen Ist-Punkte, aus denen jeweils ein Ist-Referenzpunkt ermittelt wird, mittels Identifizierungsbereichen oder Identifizierungslinien, wie es hierin für die Ermittlung von Ist-Referenzpunkten beschrieben ist, erfolgt.

Dabei kann vorgesehen sein, dass sich quer zur Hauptrichtung erstreckende und entlang der Hauptrichtung hintereinander gelegene Umgebungsbereiche und insbesondere Mittelungs-Querabschnitte oder Identifizierungsbereiche definiert werden und dass für die Ermittlung eines jeweiligen Mittelwertes der Höhenkoordinaten-Werte für jeden Identifizierungsbereich die Höhenkoordinaten-Werte von Ist-Punkten verwendet werden, die in jeweils einem Identifizierungsbereich gelegen sind. Die Identifizierungsbereiche können sich über die gesamte Breite des Prüfbereichs erstrecken und können insbesondere durch ihre Breite definiert sein, die dadurch bestimmt sein kann, dass deren in der Hauptrichtung verlaufende Breite aus der Länge des Prüfbereichs B1 dividiert durch die Anzahl der Ist-Punkte ermittelt wird. Hierbei kann die Länge des Prüfbereichs B1 in verschiedener Weise definiert sein, wie z.B. durch die Länge der Mittellinie des Prüfbereichs B1, durch die Länge einer Geraden durch den Flächenmittelpunkt der Oberfläche TE in der Hauptrichtung, durch die Länge der längsten Linie quer über die Oberfläche TE, durch eine charakteristische Länge mit der größten Krümmung oder Krümmungsänderung. Anstatt von Identifizierungsbereichen kann vorgesehen sein, dass zur Ermittlung der Mittelwerte der Höhenkoordinaten-Werte Identifizierungslinien oder Identifizierungsgeraden definiert werden, die quer oder senkrecht zur Hauptrichtung verlaufen und deren Abstand wie bezüglich der Breite der Identifizierungsbereiche angegeben ermittelt werden kann.

Bei dem dargestellten Ausführungsbeispiel werden die Mittelwerte der Höhenkoordinaten-Werte jeweils für Ist-Punkte zur Ermittlung der Ist-Referenzpunkte durch Identifizierungslinien ILM1, ILM2, ILM3, ILM4, ILM5 definiert, die quer zur Hauptrichtung und insbesondere in der Y-Richtung verlaufende Linien sind, die jeweils in der Y-Richtung hintereinander liegende Ist-Punkte, z.B. Ist-Punkte M11 bzw. M21, ..., M61, oder Gitterpunkte, z.B. die Gitterpunkte GM11, GM21, ..., GM61, miteinander verbinden. Dabei kann vorgegeben sein, dass sich die Identifizierungslinien, auf denen die Ist-Punkte gelegen sind, nicht schneiden.

Alternativ dazu kann vorgesehen sein, dass die Mittelwerte der Höhenkoordinaten-Werte jeweils für Ist-Punkte durch Identifizierungslinien definiert werden, die quer zur Hauptrichtung und insbesondere in der Y-Richtung verlaufende Linien sind und die jeweils in der Y-Richtung hintereinander liegende Gitterpunkte GM11, GM21, ..., GM61 , miteinander verbinden. Dabei werden für jeweils einen Mittelwert Ist-Punkte einer Abfolge von Ist-Punkten verwendet, die sich entlang einer jeweiligen Gitterpunkte GM11, GM21, ..., GM61 , miteinander verbindenden Linie gelegen sind. Dabei kann vorgegeben sein, dass sich die Linien, entlang denen die Ist-Punkte gelegen sind, nicht schneiden.

Statt Linien können jeweils generell Mittelungs-Querabschnitte, die auch flächige als Identifizierungs-Abschnitte sein können, vorgesehen sein. Dabei kann insbesondere vorgesehen sein, dass die Linien in Identifizierungs-Abschnitten oder Mittelungs-Querabschnitten gelegen sind, wobei die Flächen der Identifizierungs-Abschnitte dadurch definiert sein können, dass die Linien Mittellinien derselben sind und verschiedene Identifizierungs-Abschnitte sich nicht überschneiden.

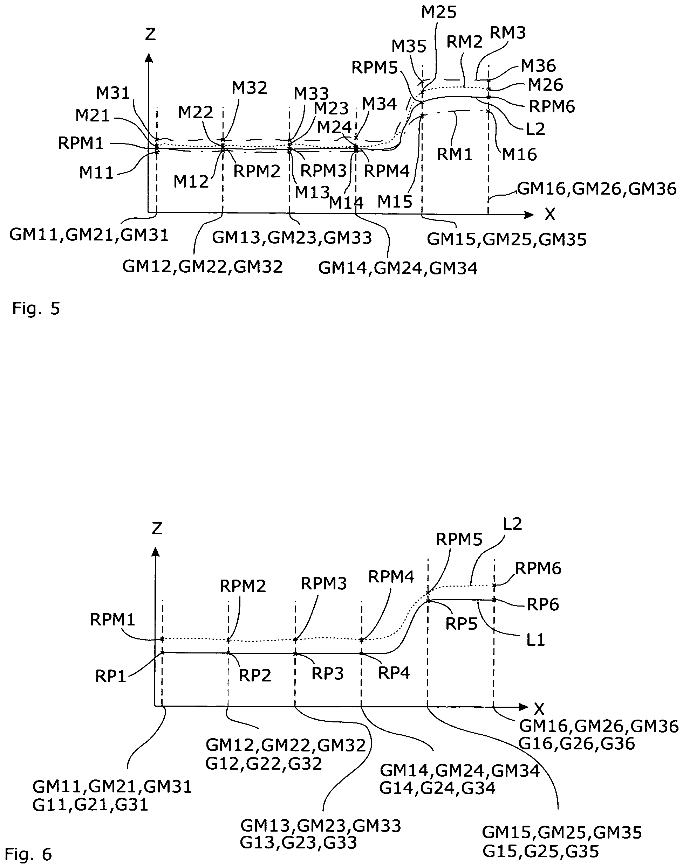

In der Figur 5 sind in einem Diagramm beispielartig Reihen RM1, RM2, RM3 von Ist-Punkten Reihen dargestellt. Die nicht durchgezogenen Linien RM1, RM2, RM3 sind nur zur Veranschaulichung eingetragen, um in Analogie zur Darstellung der Figur 4 drei Reihen von Ist-Punkten kenntlich zu machen. Aus den Reihen der Ist-Punkte in dem Prüfbereich B2 wird eine Reihe von Ist-Referenzpunkten RPM1, RPM2, RPM3, RPM4, RPM5, RPM6 ermittelt. Dabei entsteht jeder Referenzpunkt dadurch, dass sich der Höhenkoordinaten-Wert für die jeweilige Identifizierungslinie als Mittelwert der Höhenkoordinaten-Werte der Ist-Punkte (in der Figur 5 z.B. die Ist-Punkte M11, M21, M31), die auf jeweils einer entsprechenden Identifizierungslinie gelegen sind, ergibt. Die gemäß Figur 5 entstehende Ist-Referenzreihe L2 ist dort zur Veranschaulichung durch eine Verbindungslinie kenntlich gemacht.

In einem weiteren Schritt wird eine zweite Näherungs-Funktion L2 als Näherung für den Verlauf der Ist-Referenzreihe RL2 der Ist-Referenzpunkte gebildet. Für das Beispiel der Figur 5 ist eine solche zweite Näherungs-Funktion L2 zusammen mit der ersten Näherungs-Funktion L1 in der Figur 7 dargestellt.

Zusammenfassend sind insbesondere folgende Verfahrensschritte vorgesehen:
(a) mittels eines Oberflächen-Messgeräts an einer Ist-Oberfläche eines Exemplars des Verkleidungsteils Ermittlung eines Ist-Punkte-Datensatzes von Ist-Punkten,
(b) Ermittlung von mehreren entlang und in einem Abstand zueinander verlaufenden Reihen von Ist-Punkten jeweils in Raumkoordinaten in zwei Richtungen entlang der Erstreckung der Soll-Oberfläche und in einer quer zur Erstreckungsrichtung verlaufenden Höhenkoordinate,
(c) Ermittlung einer entlang zu den Reihen von Ist-Punkten verlaufenden Ist-Referenzreihe von Ist-Referenzpunkten, die jeweils einen Mittelwert der Höhenkoordinaten-Werte von Ist-Punkten einer Abfolge von Ist-Punkten der Ist-Punktereihen aufweisen, die sich jeweils in einer von der Hauptrichtung abweichenden Richtung oder sich jeweils quer zur Hauptrichtung erstreckt,
(d) Bildung einer zweiten Näherungs-Funktion L2 als Näherung für den Verlauf der Ist-Referenzpunkte der Ist-Referenzreihe,
(e) aus der ersten Näherungs-Funktion L1 und der zweiten Näherungs-Funktion L2 Bildung einer Kriteriumskurve und Ermittlung eines Oberflächendefekts an Hand eines Kriteriums, das auf die Kriteriumskurve angewendet wird.

Durch die Verwendung der Mittelwerte sowie der Näherungs-Funktionen L1, L2 erfolgt eine Glättung der Reihen von gemessenen Werten.

In einem weiteren Verfahrensschritt erfolgt ein Vergleich der ersten Näherungs-Funktion L1 und der zweiten Näherungs-Funktion L2, wobei dabei vorgesehen sein kann, dass auch aus diesen abgeleitete Funktionen miteinander verglichen werden.

Nach einer Ausführungsform des Verfahrens ist vorgesehen, dass aus der ersten Näherungs-Funktion L1 und der zweiten Näherungs-Funktion L2 jeweils eine Ableitungsfunktion gebildet wird. In der Figur 8 sind die Ableitungsfunktionen mit z'ₛₒₗₗ (x) bzw. mit z'ᵢₛₜ (x) bezeichnet. Durch die Verwendung von Ableitungsfunktionen wird ein zusätzlicher Glättungs-Effekt erreicht. Die Werte der Ableitungsfunktionen mit z'ₛₒₗₗ (x) bzw. mit z'ᵢₛₜ (x) werden entlang der jeweiligen Hauptrichtung an einander entsprechenden Stellen jeweils miteinander verglichen. An Stellen, an denen die Differenz der Werte der Ableitungsfunktionen einen vorgegebenen Grenzwert überschreitet, wird ein Oberflächendefekt an der Oberfläche 1 a des untersuchten Prüfbereichs B2 angenommen. Somit kann insbesondere vorgesehen sein,
- dass die Kriteriumskurve durch Bildung von Differenzen von Werten von Ableitungsfunktionen z'ₛₒₗₗ (x), z'ᵢₛₜ (x) der ersten Näherungs-Funktion L1 und der zweiten Näherungs-Funktion L2 entlang der jeweiligen Hauptrichtung an einander entsprechenden Stellen erzeugt wird,
- dass eine Defektstelle identifiziert wird, an denen als Defekt-Kriterium die Differenz der Werte der Ableitungsfunktionen einen vorgegebenen Grenzwert überschreitet.

Nach einer dazu alternativen Ausführungsform des erfindungsgemäßen Verfahrens ist die Kriteriumskurve eine Differenzkurve aus der Differenz der ersten Näherungs-Funktion L1 und der zweiten Näherungs-Funktion L2. Die Ermittlung eines Oberflächen-Defekts erfolgt durch die Ermittlung von Abweichungen, die einen vorgegebenen Grenzwert als Defekt-Kriterium überschreiten.

Nach einer weiteren Ausführungsform kann vorgesehen sein,
- dass die Kriteriumskurve durch Bildung von Differenzen zwischen Werten der ersten Näherungs-Funktion L1 und Werten der zweiten Näherungs-Funktion L2 entlang der jeweiligen Hauptrichtung an einander entsprechenden Stellen erzeugt wird,
- dass eine Defektstelle identifiziert wird, an denen als Defekt-Kriterium das Integral der Differenzen über die Länge des Prüfbereichs entlang der jeweiligen Hauptrichtung geteilt durch einen Längenwert, der aus einer Länge des Prüfbereichs entlang der jeweiligen Hauptrichtung abgeleitet ist, einen vorgegebenen Grenzwert überschreitet.

Dabei erfolgt jeweils eine Identifizierung einer Stelle der zweiten Näherungs-Polynomfunktion als Stelle eines Oberflächendefekts, an der die ermittelte Überschreitung des Grenzwertes auftritt.

Bei den erfindungsgemäßen Ausführungsformen des Verfahrens können die erste Näherungs-Polynomfunktion L1 oder die zweite Näherungs-Polynomfunktion L2 oder beide jeweils als Näherungs-Polynomfunktion gebildet sein. Dabei kann insbesondere vorgesehen sein, dass die Struktur der Polynomfunktion und insbesondere deren größte Potenz z.B. aufgrund der an der Soll-Oberfläche auftretenden Krümmungen vorgegeben wird.

Alternativ oder zusätzlich kann die erste Näherungs-Funktion L1 oder die zweite Näherungs-Funktion L2 oder beide dieser Funktionen aus einer oder mehreren der folgenden Funktionen gebildet sein:
- einer Näherungs-Polynomfunktion,
- einer Spline-Funktion,
- einer B-Spline-Funktion,
- einer Non-Uniform Rational B-Spline-Funktion.

Die konkrete Definition der jeweiligen Funktion und z.B. Polynomfunktion erfolgt vorzugsweise durch ein Ausgleichsrechnung oder Parameterschätzung. Dabei kann vorgesehen sein, dass vorgegebene Näherungskriterien verwendet werden. Als Näherungskriterium zur Festlegung der kann insbesondere vorgesehen sein, dass die jeweilige Funktion danach angepasst wird, dass die Ist-Referenzpunkte bzw. Soll-Referenzpunkte insgesamt einen minimalen Abstand zur Kurve der jeweilige Funktion im jeweiligen Prüfbereich B1 bzw. B2 hat. Beispielsweise kann dabei vorgesehen sein, dass die Anpassung der nach ihrer Struktur vorgegebenen Funktion mit Hilfe der Methode der kleinsten Quadrate durchgeführt wird. Dabei werden die Parameter der vorgegebenen Näherungsfunktion L1 bzw. L2 in bekannter Weise derart verbessert, so dass die Summe der Quadrate aller einzelnen Abweichungen zwischen Ist- und Soll-Daten minimal wird.

## Patentansprüche

1. Verfahren zur Ermittlung von Oberflächendefekten einer Ist-Oberfläche (1a) eines Verkleidungsteils (1), das Verfahren ausgehend von einer ersten Näherungs-Funktion (L1) für eine Soll-Oberfläche (1a) und aufweisend die folgenden Schritte:
(a) mittels eines Oberflächen-Messgeräts an einer Ist-Oberfläche eines Exemplars des Verkleidungsteils Ermittlung eines Ist-Punkte-Datensatzes von mehreren entlang und in einem Abstand zueinander verlaufenden Reihen von Ist-Punkten jeweils in Raumkoordinaten in zwei Richtungen entlang der Erstreckung der Ist-Oberfläche und in einer quer zur Erstreckungsrichtung verlaufenden Höhenkoordinate,
(b) Ermittlung einer entlang zu den Reihen von Ist-Punkten verlaufenden Ist-Referenzreihe von Ist-Referenzpunkten, die jeweils einen Mittelwert der Höhenkoordinaten-Werte von Ist-Punkten jeweils einer sich in einer von der Hauptrichtung abweichenden Richtung erstreckenden Abfolge von Ist-Punkten der Istpunkte-Reihen aufweisen,
(c) Bildung einer zweiten Näherungs-Funktion (L2) als Näherung für den Verlauf der Ist-Referenzpunkte der Ist-Referenzreihe,
(d) aus der ersten Näherungs-Funktion (L1) und der zweiten Näherungs-Funktion (L2) Bildung einer Kriteriumskurve und Ermittlung eines Oberflächendefekts an Hand eines Kriteriums, das auf die Kriteriumskurve angewendet wird.

2. Verfahren nach dem Anspruch 1, wobei die erste Näherungs-Funktion (L1) für die Soll-Gestalt der Oberfläche (1 a) mit den folgenden Schritten ermittelt wird:
- aus einer Mehrzahl von entlang zueinander und entlang einer Hauptrichtung verlaufenden Reihen von Soll-Punkten Ermittlung einer entlang zu diesen verlaufenden Soll-Referenzreihe (SR) von Soll-Referenzpunkten, die jeweils einen Mittelwert der Höhenkoordinaten-Werte von Soll-Punkten jeweils einer sich von Hauptrichtung abweichende Richtung und in dieser Richtung erstreckenden Abfolge von Soll-Punkten der Soll-Punkteaufweisen,
- Bildung der ersten Näherungs-Funktion (L1) als Näherung für den Verlauf der Soll-Referenzpunkte der Soll-Referenzreihe.

3. Verfahren nach dem Anspruch 1 oder 2, wobei die erste Näherungs-Funktion (L1) oder die zweite Näherungs-Funktion (L2) oder beide dieser Funktionen aus einer oder mehreren der folgenden Funktionen gebildet sind:
- einer Näherungs-Polynomfunktion,
- einer Spline-Funktion,
- einer B-Spline-Funktion,
- einer Non-Uniform Rational B-Spline-Funktion.

4. Verfahren nach dem Anspruch 1, 2 oder 3,
- wobei die Kriteriumskurve durch Bildung von Differenzen zwischen Werten der ersten Näherungs-Funktion (L1) und Werten der zweiten Näherungs-Funktion (L2) entlang der jeweiligen Hauptrichtung an einander entsprechenden Stellen erzeugt wird,
- wobei eine Defektstelle identifiziert wird, an denen als Defekt-Kriterium das Integral der Differenzen über die Länge des Prüfbereichs entlang der jeweiligen Hauptrichtung geteilt durch einen Längenwert, der aus einer Länge des Prüfbereichs entlang der jeweiligen Hauptrichtung abgeleitet ist, einen vorgegebenen Grenzwert überschreitet.

5. Verfahren nach dem Anspruch 1, 2 oder 3,
- wobei die Kriteriumskurve durch Bildung von Differenzen von Werten von Ableitungsfunktionen (z'ₛₒₗₗ (x), z'ᵢₛₜ (x)) der ersten Näherungs-Funktion (L1) und der zweiten Näherungs-Funktion (L2) entlang der jeweiligen Hauptrichtung an einander entsprechenden Stellen erzeugt wird,
- wobei eine Defektstelle identifiziert wird, an denen als Defekt-Kriterium die Differenz der Werte der Ableitungsfunktionen einen vorgegebenen Grenzwert überschreitet.

6. Verfahren nach dem Anspruch 1,
- wobei die Kriteriumskurve eine Differenzkurve aus der Differenz der ersten Näherungs-Funktion (L1) und der zweiten Näherungs-Funktion (L2) ist,
- wobei das Defekt-Kriterium ein Grenzwert ist,
- wobei die Ermittlung eines Oberflächen-Defekts durch die Ermittlung von Abweichungen erfolgt, die den Grenzwert überschreiten.

7. Verfahren nach dem Anspruch 1,
wobei die Kriteriumskurve eine Differenzkurve aus der Differenz der ersten Näherungs-Funktion (L1) und der zweiten Näherungs-Funktion (L2) ist,
wobei das Defekt-Kriterium ein Grenzwert ist,
wobei die Ermittlung eines Oberflächen-Defekts durch die Ermittlung von Abweichungen zwischen einer Ableitung der ersten Näherungs-Funktion (L1) und einer Ableitung der zweiten Näherungs-Funktion (L2) erfolgt, die den Grenzwert überschreiten.

8. Verfahren nach einem der voranstehenden Ansprüche, wobei die Höhenkoordinaten der Soll-Punkte jeweils die Höhenkoordinate von Gitterpunkten sind, die in einer durch die Raumkoordinaten in zwei Richtungen entlang der Erstreckung der Soll-Oberfläche definierten Ebene liegen.

9. Verfahren nach einem der voranstehenden Ansprüche, wobei die Höhenkoordinaten der Ist-Punkte jeweils die Höhenkoordinate von Gitterpunkten sind, die in einer durch die Raumkoordinaten in zwei Richtungen entlang der Erstreckung der Ist-Oberfläche definierten Ebene liegen.

10. Verfahren nach einem der voranstehenden Ansprüche, wobei die Lage des Koordinatensystems für die Ist-Punkte durch ein näherungsweises Gleichsetzen von zumindest drei Soll-Punkten mit drei Ist-Punkten erfolgt.

11. Computer-Programmprodukt, in dem die Schritte des Verfahrens nach einem der voranstehenden Ansprüche implementiert sind.
